(19) **Europäisches Patentamt / European Patent Office / Office européen des brevets**

(11) **EP 1 914 519 B1**

(12) **EUROPEAN PATENT SPECIFICATION**

(45) Date of publication and mention
of the grant of the patent:
**12.09.2012 Bulletin 2012/37**

(51) Int Cl.:
***G01D 4/00*** *(2006.01)*

(21) Application number: **07020635.4**

(22) Date of filing: **22.10.2007**

(54) **Method and system for remote data collection**

Verfahren und System zur Ferndatensammlung

Système et procédé pour la collecte de données à distance

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **20.10.2006 EP 06022081**

(43) Date of publication of application:
**23.04.2008 Bulletin 2008/17**

(73) Proprietor: **Vestel Elektronik Sanayi ve Ticaret A.S.**
**45030 Manisa (TR)**

(72) Inventors:
• **Yalcin, Yanki**
 **Vestek Elektronik Arastirma Gelistirme**
 **Maslak, Istanbul (TC)**

• **Salt, Metin**
 **Vestel Elektronik Sanayi ve Ticaret A.S**
 **45030 Manisa (TC)**

(74) Representative: **Cayli, Hülya et al**
**Paragon Consultancy Inc.**
**Koza Sokak No: 63/2**
**GOP**
**06540 Ankara (TR)**

(56) References cited:
**US-A- 5 918 380**

**Description**

The present invention relates to communications between remote devices, and more particularly to a method and system for remote data collection.

The invention has applications in numerous situations where there is a desire to minimize the communication line density (e.g. network traffic) and the cost of statistical knowledge accumulation in systems where networking is used to collect data. The data collected may be, for example, the amount of consumed electricity, gas, water, oil and the like, in a given measurement period. For example, in energy distribution systems, remote meter reading is a dense process that must be arranged and managed well, so as to prevent undesirably high densities and consequent errors in the communications lines. This is a costly process, both for the system supplier and the network operator.

In energy distribution management systems, the statistical data obtained from the user (user's meter) is may be employed to monitor and control the system. With the help of this data, energy cuts and tariff values can easily be set and people can be guided in energy usage, so as to decrease the energy density used in several sectors, time periods or areas. The data may or may not be displayed graphically. The gathered data may provide quantized values of consumption, or an indication such as that the consumption has doubled. Alternatively, it may show an excessive increase in the energy usage, which may indicate a leakage in the system which needs to be repaired. Alternatively, the collected data may be used to adjust the energy usage in specific time periods. There are many other fields in which this statistical data can be used, in addition to energy distribution (where such data is a very powerful tool for the system management).

Collection of such large amounts of data involves significant expense and time. This data must be collected in time periods as small as possible, and with the lowest amount of cost possible. The best way to supply this data is reading the meters in x (small time duration) periods and to generate the statistical tables based on these collected values. For example, it can be very useful, for given household, to know the amount of electricity, oil or gas consumed during a 1 hour period (e.g. 6pm to 7pm; or at any other time); and then to assemble this data for various times and numerous households.

In relation to the data read/collection, there are several methods for accomplishing this. One of them is the manual meter read, in which technicians are employed to read the meters. There are lots of disadvantages in usage of this system: it can be a difficult, costly, error-prone, and possibly dangerous, process.

Another technique used to read the meters is Automatic Meter Read (AMR). An example of AMR is off-site meter read (OMR), also known as walk-by or drive by meter read. In such methods, meters are read via a network, rather than by technicians. Here the main problem is the density of communications that may occur in the network during the read process. Given the number of meters on the network (one per household/building), there will be a very large amount of network activity on the network during the data read/collection process. In particular, it is problematic for the network supplier that a large amount of data is passing through its network during small time periods. This can increase the cost of meter reading from the network supplier. In addition, transfer/carriage of this amount data can cause data corruption, due to communication density and data collision in the network. Also, as the amount of traffic increases, the absolute amount of errors will increase due to the error percentage factor.

JP-A-2001331883 discloses a centralized monitoring system by which continuous meter-reading can be performed. The centralized monitoring centre is provided with a daily meter-reading schedule for each of terminal equipment, and each of the controllers collects meter-reading data from a correspondent gas meter in response to the meter-reading request received from the centralized monitoring centre and transmits the collected meter-reading data to the centralized monitoring centre.

JP1282699 discloses a system to decrease the connection time on a communication line by disconnecting the communication line between a collecting centre and a meter reading unit during the meter reading action of the meter reading unit. A collecting centre transmits a meter reading command to execute the meter reading operation to a meter reading unit, the meter reading unit starts the meter reading operation, returns a reception response signal to the collecting centre, and disconnects the communication line between the collecting centre and the meter reading unit. Read-meter data obtained by a meter reading part are stored in memory, and when a collecting command is received from the collecting centre, the stored read-meter data are returned to the collecting centre, the communication line during the meter reading operation of the meter reading unit being disconnected.

US2006/0023853 discloses a system for the remote collection of data for the account of an entity, using a data communications network operated by a third party with respect to the entity. It is characterised in that the access to said data communication network by the entity for remote data collection is governed dynamically by said third party as a function of the spare data-carrying capacity of the communications network. The third party may thus grant the entity access to the communications network when the level of the third party's own data traffic on said network is below a determined threshold value, corresponding to an occupation below peak capacity. For automatic meter reading (AMR), where the network operator, e.g. a cellular telephone operator, is a third party with respect to the utilities company, the collected data is meter reading data from remote meters sent via GPRS interfaces.

**[0010]** [x]<US-A-5918380 discloses a metering system for metering the consumption of electrical energy to provide time-of-use and demand metering in the presence of at least one power outage event includes an encoder device for transmitting a radio frequency (RF) signal and a interrogate/receiver device for receiving the radio frequency signal transmitted by the encoder device. The encoder device has apparatus for sensing electrical power consumption and for sensing a power outage. Additional, the encoder device has apparatus for periodically generating an encoded RF signal for transmission by the encoder device. The signal has a plurality of discrete components, each of the components being related to electrical power consumption over a selected interval of time. The signal further has a power outage flag associated with each discrete component, the flag being set for any interval of time during which a power outage is sensed. A meter counter for incrementally increasing a count as a function of time is Included. The meter counter is powered by the electrical power being metered. The Interrogate/receiver device has a decoder that is communicatively coupled to the encoder device for decoding the encoded RF signal received from the encoder device. A receiver counter for incrementally increasing a count as a function of time is asynchronous with respect to the meter counter.

**[0011]** Therefore, existing processes for periodic data readings for small time durations are problematic and need to be improved to decrease the cost, and increase the efficiency, of the system.

**[0012]** This invention seeks to overcome the aforementioned problems and provide an improved method and system for remote data collection.

**[0013]** The present invention provides a method of determining, for each of one or more elemental periods in a measurement period, an elemental usage value, each elemental usage value indicating the amount of usage of a resource by an entity and being associated with the respective elemental period, each elemental period being of the same length and the measurement period being an integer multiple of the elemental period, the method comprising: obtaining a plurality of measured usage values in succession, each measured usage value relating to a respective one of a plurality of successive data read periods, the data read periods including a first data read period and a plurality of further data read periods; and determining said elemental usage values from the obtained measured usage values; wherein the further data read periods are of equal length and the first data read period is longer than the further data read periods by said elemental period.

**[0014]** Preferably, obtaining said plurality of measured usage values includes: the step of obtaining a first reading at the start of the first data read period); obtaining a second reading at the end of the first data read period; for each of the plurality of further data read periods, obtaining a respective reading at the end of the further data read period.

**[0015]** The measured usage values may comprise said first, second and further readings; and determining said elemental usage values comprises, for the or each elemental period, determining the elemental usage value associated therewith using the difference between two successive readings.

**[0016]** The measured usage values may comprise the difference between two successive readings; and determining said elemental usage values comprises, for the or each elemental period, determining the elemental usage value associated therewith using the difference between successive measured usage values.

**[0017]** Preferably, each reading comprises an instantaneous cumulative reading of resource usage.

**[0018]** Preferably, the total number of data read periods is given by:

$$y = x/\Delta x + 1,$$

where x is the measurement period whose statistical values are sought to be obtained, and
$\Delta x$ is the length of said elemental periods.

**[0019]** Preferably, the overall duration to take all the readings is given by:

$$T = [[(x/\Delta x)+1].z] + \Delta x$$

where x is the measurement period whose statistical value is sought to be obtained,
$\Delta x$ is the length of said elemental periods, and
z is the length of said further data read periods.

**[0020]** Preferably, the steps of obtaining the measured usage values comprise: using a meter to measure the usage of a resource over the first data read period or the or each further data read period, respectively, and generating an electronic signal representative of the measured usage values.

**[0021]** The entity may be a building, part thereof, or some geographical unit or area, and the parameter value is the amount of (a) electricity consumed, (b) water consumed, (c) gas consumed, or (d) oil consumed.

**[0022]** Preferably, the method further includes transmitting said measured usage values and/or the or each reading over a network to a remote location.

Preferably, said measured usage values and/or the or each reading is transmitted substantially immediately after a respective reading or determination of a respective parameter value.

In one embodiment, one or more of said measured usage values and/or the or each reading is stored in memory; and one or more stored measured usage values and/or readings are transmitted at predetermined times, or following a predetermined time delay after a respective reading or determination of a respective parameter value.

According to another aspect of the invention there is provided a metering unit, associated with an entity, for each of one or more elemental periods in a measurement period, an elemental usage value, each elemental usage value indicating the amount of usage of a resource by an entity and being associated with the respective elemental period, each elemental period being of the same length and the measurement period being an integer multiple of the elemental period, the metering unit comprising: a meter, conversion circuitry, and a processor; wherein the processor is operable for: obtaining a plurality of measured usage in succession, each measured usage value relating to a respective one of a plurality of successive data read periods, the data read periods including a first data read period and a plurality of further data read periods; and determining said elemental usage values from the obtained measured usage values; wherein the further data read periods are of equal length and the first data read period is longer than the further data read periods by said elemental period.

Preferably, in obtaining said plurality of measured usage processor is operable for: obtaining a first reading at the start of the first data read period; obtaining a second reading at the end of the first data read period; for each of the plurality of further data read periods, obtaining a respective reading at the end of the further data read period.

The measured usage values may comprise said first, second and further readings; and the processor is operable for determining said elemental usage values comprises, for the or each elemental period, determining the elemental usage value associated therewith using the difference between two successive readings.

The measured usage values may comprise the difference between two successive readings; and the processor is operable for determining said elemental usage values comprises, for the or each elemental period, determining the elemental usage value associated therewith using the difference between successive measured usage values.

Preferably, each reading comprises an instantaneous cumulative reading of resource usage.

Preferably, the total number of data read periods is given by

$$y = x/\Delta x + 1,$$

where x is the measurement period whose statistical values are sought to be obtained, and
$\Delta x$ is the length of said elemental periods.

Preferably, the overall duration to take all the readings is given by:

$$T = [[(x/\Delta x)+1].z] + \Delta x$$

where x is the measurement period whose statistical values are sought to be obtained,
$\Delta x$ is the length of said elemental periods, and
z is the length of said further data read periods.

Preferably, in obtaining the measured usage values the processor is operable for: using a meter to measure the usage of a resource over the first data read period or the or each further data read period, respectively, and generating an electronic signal representative of the measured usage values.

The entity may be a building, part thereof, or some geographical unit or area, and the measured usage value is the amount of (a) electricity consumed, (b) water consumed, (c) gas consumed, or (d) oil consumed.

Preferably, the metering unit further includes a data transmission device, wherein the processor is further operable for transmitting said of measured usage values and/or the or each reading over a network to a remote location. Preferably, said processor is further operable for transmitting said measured usage values and/or the or each reading substantially immediately after a respective reading or determination of a respective measured usage values.

Preferably, the processor is further operable for storing in memory one or more of measured usage values and/or the or each reading; and transmitting one or more of said measured usage values and/or readings at predetermined times, or following a predetermined time delay after a respective reading or determination of a respective measured usage values.

According to another aspect of the invention there is provided a data processing system for determining, for each of one or more elemental periods in a measurement period, an elemental usage value, each elemental usage value indicating the amount of usage of a resource by an entity and being associated with the respective elemental period, each elemental period being of the same length and the measurement period being an integer multiple of the elemental period, the system comprising: a processor; memory; and a communications device; wherein the processor is operable in conjunction with the memory and communications device for receiving, processing and transmitting data; the data processing system being adapted to be wire or wirelessly coupled to one or more remote metering units, the or each metering unit being associated with a respective entity; wherein, for the or each metering unit, the processor is operable for transmitting a plurality of polling communications, causing the metering unit to obtain a plurality of measured usage values in succession, each measured usage value relating to a respective one of a plurality of successive data read periods, the data read periods including a first data read period and a plurality of further data read periods; and determine said elemental usage values from the obtained measured usage values; wherein the further data read are of equal length (z) and the first data read period is longer than the further data read periods by said elemental period.

Preferably, for the or each metering unit, the processor is operable for transmitting a first polling communication, causing the metering unit to obtain a first reading at the start of the first data read period; receiving the first reading from the metering unit; transmitting a second polling communication, causing the metering unit to obtain a second reading at the end of the first data read period; receiving the second reading from the metering unit; for each of one or more further data read periods, transmitting a further polling communication, causing the metering unit to obtaining a respective further reading at the end of each of the further data read period(s); receiving the further reading(s) from the metering unit.

The measured usage values may comprise said first, second and further readings; and the processor is operable for determining said elemental usage values comprises, for the or each elemental period, determining the elemental usage value associated therewith using the difference between two successive readings.

The measured usage values may comprise the difference between two successive readings; and the processor is operable for determining said elemental usage values comprises, for the or each elemental period, determining the elemental usage value associated therewith using the difference between successive measured usage values.

Preferably, each reading comprises an instantaneous cumulative reading of resource usage.

According to another aspect of the invention there is provided a programmable metering unit when suitably programmed for carrying out at least the steps of any of claims 1 to 12 of the appended claims.

According to another aspect of the invention there is provided a recordable, rewritable or storable medium having recorded or stored thereon data defining or transformable into instructions for execution by processing circuitry and corresponding to at least the steps of any of claims 1 to 12 of the appended claims.

According to another aspect of the invention there is provided a server computer incorporating a communications device and a memory device and being adapted for transmission on demand or otherwise of data defining or transformable into instructions for execution by processing circuitry and corresponding to at least the steps of any of claims 1 to 12 of the appended claims.

The present invention has advantages over known techniques, the main ones being as follows.

The techniques according to the invention decreases the amount that the network is used to a much shorter period (in the example one read a day instead of 24 reads), thereby also reducing costs paid for network usage.

Another advantage is for the network supplier. Instead of disturbing the network throughout the day, the network is used once in a period, so the density in the network and possible errors that may be caused due to large data transfer throughout the day are less of a problem or are eliminated.

In addition, overall measurement durations used to give the statistical values may be adjusted so as to prevent unwanted data. For example, if it is not desired to include weekends to be counted as statistical value source, it is possible to omit weekends from measurements. This method can be used and adapted to many more systems that use different assumptions and constraints.

Embodiments of the invention will now be described in detail, by way of example, with reference to the accompanying drawings, in which:

Figure 1 shows a system for remote data collection, according to one embodiment of the invention;
Figure 2 (PRIOR ART) illustrates schematically conventional remote data collection methods;
Figure 3 shows a metering unit according to one embodiment of the invention; and
Figure 4 illustrates schematically the remote data collection method according to one embodiment of the invention.

In the description and drawings, like numerals are used to designate like elements. Unless indicated otherwise, any individual design features and components may be used in combination with any other design features and components disclosed herein.

Although the following description, for illustration purposes, relates to the measurement of consumption of a resource (e.g. electricity), and determining what is consumed in a specific (elemental) period, the invention is applicable in any situation where data representing an activity or resource, and/or associated with an entity, and associated with a specific time period, is to be determined.

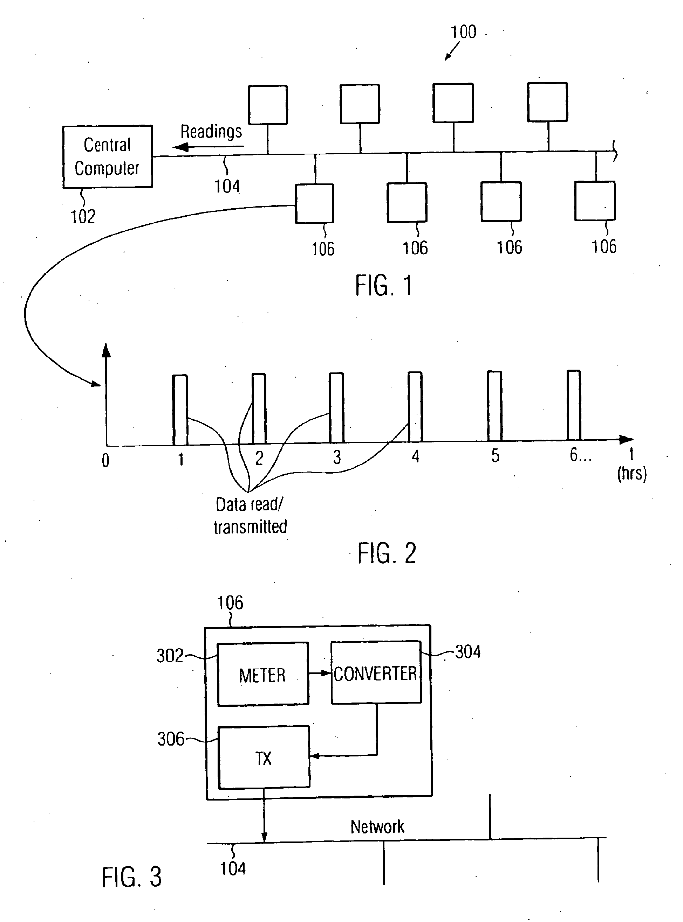

Figure 1 shows a system for remote data collection, according to one embodiment of the invention. The system, generally designated 100, includes a central computer 102, coupled via a fixed line network (e.g. internet) 104 to multiple metering units 106. Each metering unit 106 is, for example, located at or within a residential unit such as a house, apartment or office, although it may cover a larger or smaller scale than this. As is discussed hereinafter, data (indicative, for example, of electricity or other resource consumed) is periodically sent over the network 104 from each metering unit 106 to the central computer 102.

It will be appreciated by persons skilled in the art that the method to collect readings data may vary. Although Fig. 1 represents an embodiment of how the data may be collected, this is not the only way. The metering units 106 could be much more dispersed, e.g. 10 metering units might be connected to one computer (not shown), 10 meters to another computer (not shown) etc.; then these computers might be connected to a central computer. The network 104 could be a wireless one (such as GPRS) or it could be a cable network. It is also possiblethat it is a combination of wireless and cabled networks. There is no restriction regarding the network type.

Figure 2 (PRIOR ART) illustrates schematically conventional remote data collection methods. Here, a data read/transmittion operation (represented by the pulses) is performed by each meter on an hourly basis. It will be appreciated that, for a large number of metering units, this causes the abovementioned communications density and network traffic problems.

Figure 3 shows a metering unit 106 according to one embodiment of the invention. Each metering unit 106 may include suitable processing circuitry (such as a microprocessor) and volatile memory (not shown), as well as a meter 302 (such as an analog electricity consumption meter), a converter 304 (for example a well known ADC), and a data transmission device 306 (for example a modem). As is known to persons skilled in the art, the thus described metering unit 106 may, based on suitably programmed routine, periodically or aperiodically transmitted digitals signals (for example using TCP/IP or GPRS protocols) representing the readings, following their measurement by the meter 302.

Alternatively, the central computer 102 (see Fig. 1) may be suitable programmed for periodically or aperiodically transmitted polling signals (for example using TCP/IP or GPRS protocols) to each metering unit 106 (e.g. to each metering unit at different times), the polling signals prompting the metering unit to commence a meter reading period and/or to transmit a digital signal representing the readings, following their measurement by the meter 302.

In any event, the operations of data reading and transmission of the reading over the network may be performed synchronously or asynchronously.

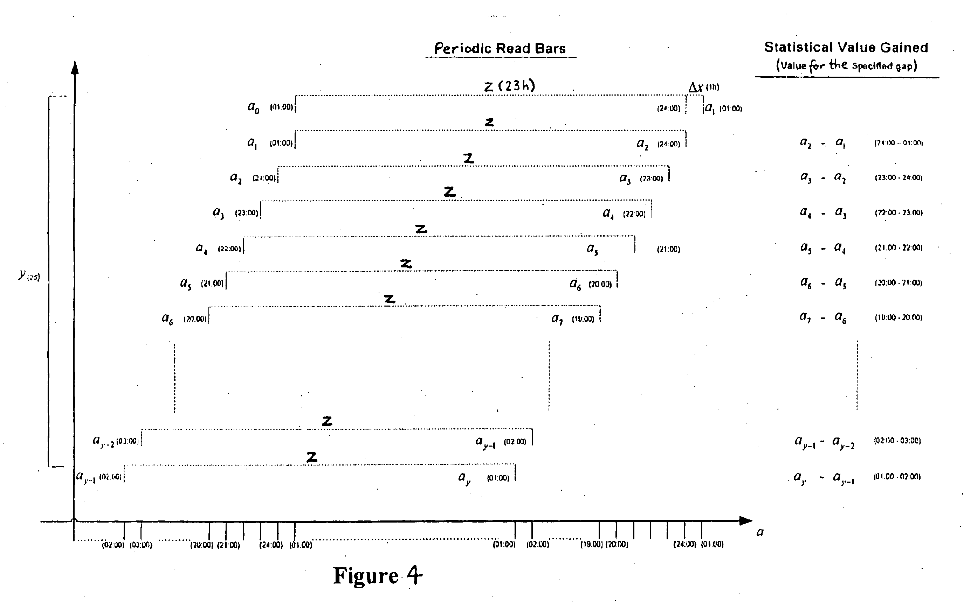

Figure 4 illustrates schematically the remote data collection method according to one embodiment of the invention. Data read values are sorted under the "Statistical Values Gained" table as shown. With the help of this table, an overall estimation for a user's energy usage can easily be made, giving the energy distributor knowledge about user's patterns/habits. The methods employed by the invention will now be discussed in more detail.

Preferably, the method is based on an improved scheme of data read periods in an AMR system. Meters are read through the network supplied by the network operator.

Referring to Fig. 4, the notation used hereinafter will now be explained.

z: periodic read duration (i.e. the period between successive readings, apart from that between the first and seconds readings, which is equal to (z+$\Delta$x); see hereinafter). z is for example 23 or 47 hours.

x: the period for which a statistical values are sought to be gained. x is, for example, 24 or 48 hours.

$\Delta$x: precision (also known as the elemental period). Usually hourly precision is used, so $\Delta$x is, for example, 1 hour).

y: number of measurements needed to be performed for collection of enough data for statistical representation. y is given by

$$y = \left( x \middle/ \Delta x \right) + 1 \qquad\qquad (eq.3)$$

(Thus, y is, for example, 25 times (readings, or data read periods z); i.e. x=24 and $\Delta$x=1).

T: total duration (time period necessary to take all the readings. T is given by

$$T = [[(x/\Delta x)+1].z] + \Delta x \qquad\qquad (eq.4)$$

i.e. T =(y.z)+$\Delta$x

Thus, T is, for example, 25x47 +1 = 1176 hours, = 1176/24 = 49 days.

Example 1.

Here:

x= 48 hrs,
Ax = 1 hr, and
z = 47 hrs.

This gives y = (48/1)+1 = 49.
The total measurement time in hours is $(y.z)+\Delta x = 49.47 +1$
The total measurement time in days is (y.z+1)/24 = (49.47 +1)/24 = 96 days.
In this example, if the meters are going to be measured once in every 47 hours and if hourly statistics during a full 48 hour period are sought, then this measurement needs to be carried out (48/1)+1 = 49 times (=y). Since every measurement is performed once in z/24 = 47/24 days, the process of obtaining all hourly statistical values of a complete 48 hour-period will take (y.z+1)/24 = (49.47 +1)/24 = 96 days.

Example 2.

Here:

x= 24 hrs,
$\Delta x$ = 1 hr, and
z = 23 hrs.

This gives y = (24/1)+1 = 25.
The total measurement time in hours is $(y.z)+\Delta x = 25.23 +1 = 576$
The total measurement time in days is $(y.z+\Delta x)/24 = (25.23+1)/24 = 24$ days.
In this example, the statistical values are sought for only a 24 hour-period (x), with hourly precision, while measuring the meters once in every 23 hours (z). Thus, (24 / 1) + 1 = 25 times (=y) measurement is enough to collect the data. Consequently, the number of days required to obtain the hourly statistical values of 24 hour-period is $(y.z+\Delta x)/24 = (25.23+1)/24 = 24$ days.
Data collected after total duration $(y.z)+\Delta x$, provides the statistical values for each of the elemental $(\Delta x)$ time periods. The first data read period is of length $z+\Delta x$ (23 + 1 = 24 hours, in the second example; as illustrated in Fig. 4) and until the completion of the total duration (for all measurements) the other (further) periods are of length z (23 hours).
To give an idea of the selection of the periods, the following illustration is provided. x must be long enough to control and execute AMR activities, and this is suitably one day (24hrs). $\Delta x$ must be short enough to take advantage of collected statistical values, so this is suitably chosen to be one hour. Thus, y is calculated as 24/1 + 1 = 25 times (readings).
With particular reference to Fig. 4, the instantaneous meter reading taken by the system are given by

$$a_n = data \_ at \_ n \qquad \text{(eq.7)}$$

$$0 \le n \le y \qquad n \in N \ (Natural\_Numbers) \quad \text{(eq.8)}$$

Thus, the resource usage (e.g. electricity) for the first data read period (duration, e.g. 24 hrs; Fig. 4) is given by $a_1-a_0$. The resource usage (e.g. electricity) for the further data read periods (duration, e.g. 23 hrs) is given by
$a_2-a_1$,
$a_3-a_2$,
$a_4-a_3$,
$a_5-a_4$,
... and so on.
The invention is based on the discovery that, statistically, the usage habits of households and/or persons varies little over time (e.g. from day to day), when sampling/metering is performed over a significant period.
Thus, the amount of usage during the elemental period $\Delta x$ from 24:00 to 01:00 can be calculated as $(a_1-a_0)-(a_2-a_1)$.

Next, the amount of usage during the elemental period $\Delta x$ from 23:00 to 24:00 can be calculated as $(a_2-a_1) +$ (the amount of usage during the elemental period $\Delta x$ from 24:00 to 01:00; assumed to be same every day; known from the previous calculation) - $(a_3-a_2)$,

Similarly, the amount of usage during the elemental period $\Delta x$ from 22:00 to 23:00 can be calculated $(a_3-a_2) +$ (the amount of usage during the elemental period $\Delta x$ from 23:00 to 24:00; assumed to be same every day; known from the previous calculation) - $(a_4-a_3)$.

Thus, these calculations can successively be made, and a table generated with each statistical value for each of the periods $\Delta x$ in a 24 hr, 48 hr, or other period (being a multiple of $\Delta x$), referred to herein as x. This can be achieved by taking only readings with a periodicity of z.

Various variations and extensions to the above embodiments are possible. According to embodiments of the invention, the read and transmission of the data may either be achieved in synchronous processes, e.g. one way to transmit data is to transmit it as soon as it is read, or another solution is to read data and store it in a memory (not shown) and after a period of time to transmit all the data that has been stored (asynchronous mode).

In respect of the first method (synchronous), there is no need for an additional memory to store meter read data. This decreases the cost of the meter and helps the system supplier to take action in emergency cases faster, since data transmit occurs in more frequent time periods. In case the period of transmissions is small, then the network density will be very high. The invention decreases the density level of the network.

In accordance with the second method (asynchronous) mentioned above, there is need for memory (not shown) and a real time clock (not shown) implemented on the meter, which will increase the initial cost of meter hardware. This action may disables/impairs the rapid reactions to emergency cases. On the other hand, the network will not be used frequently, but large amount of data will be transferred at once in a longer period, and this action is more prone to errors than the previous method. The invention decreases both the required memory capacity -- e.g. less data will be stored -- and also the network density and error probability when compared to existing systems.

In both cases the common point is that, according to the invention, less data will be sufficient to determine the usage statistics during any time period when compared to current methods. For example, in accordance with the embodiment provided in the application, measuring data merely in daily (24 hours) periods (once a day), all hourly statistical values of energy usage of a day could be derived in 25 days without the need for measuring a larger amount of data on an hourly basis to obtain such hourly statistical values.

**Claims**

1. A method of determining, for each of one or more elemental periods ($\Delta x$) in a measurement period (x), an elemental usage value, each elemental usage value indicating the amount of usage of a resource by an entity and being associated with the respective elemental period ($\Delta x$), each elemental period ($\Delta x$) being of the same length and the measurement period x being an integer multiple of the elemental period ($\Delta x$), the method comprising:

   obtaining a plurality of measured usage values ($a_0...a_y$; $(a_1-a_0)...(a_y-a_{y-1})$) in succession, each measured usage value reflating to a respective one of a plurality of successive data read periods (01:00-01:00...02:00-01:00), the data read periods including a first data read period (01:00-01:00) and a plurality of further data read periods (01:00-24:00...02:00-01:00); and
   determining said elemental usage values from the obtained measured usage values;
   wherein the further data read periods (01:00-24:00...02:00-01:00) are of equal length (z) and the first data read period (01:00-01:00) is longer ($z+\Delta x$) than the further data read periods (01:00-24:00... 02:00-01:00) by said elemental period ($\Delta x$).

2. The method of claim 1, wherein obtaining said plurality of measured usage values ($a_0...a_y$; $(a_1-a_0)...(a_y-a_{y-1})$) includes:

   obtaining a first reading ($a_0$) at the start of the first data read period (01:00-01:00);
   obtaining a second reading ($a_1$) at the end of the first data read period;
   for each of the plurality of further data read periods (01:00-24:00...02:00-01:00), obtaining a respective reading ($a_2...a_y$) at the end of the further data read period.

3. The method of claim 2, wherein the measured usage values ($a_0...ay$; $(a_1-a_0)...(a_y-a_{y-1})$) comprise said first, second and further readings ($a_0...ay$); and
   determining said elemental usage values comprises, for the or each elemental period ($\Delta x$), determining the elemental usage value associated therewith using the difference between two successive readings.

4. The method of claim 2, wherein the measured usage values $((a_1-a_0)...(a_y-a_{y-1}))$ comprise the difference between two successive readings $(a_0...a_y)$; and
determining said elemental usage values comprises, for the or each elemental period $(\Delta x)$, determining the elemental usage value associated therewith using the difference between successive measured usage values $((a_1-a_0)...(a_y-a_{y-1}))$.

5. The method of any of claims 2 to 4, wherein each reading comprises an instantaneous cumulative reading of resource usage.

6. The method of any of the preceding claims, wherein the total number of data read periods is given by:

$$y = x/\Delta x + 1,$$

where

x is the measurement period whose statistical values are sought to be obtained, and
$\Delta x$ is the length of said elemental periods.

7. The method of any of the preceding claims, wherein the overall duration to take all the readings is given by:

$$T = [[(x/\Delta x)+1].z] + \Delta x$$

where

x is the measurement period whose statistical value is sought to be obtained,
$\Delta x$ is the length of said elemental periods, and
z is the length of said further data read periods.

8. The method of any of the preceding claims, wherein the steps of obtaining the measured usage values $(a_0...a_y; (a_1-a_0)...(a_y-a_{y-1}))$ comprise:

using a meter to measure the usage of a resource over the first data read period or the or each further data read period, respectively, and
generating an electronic signal representative of the measured usage values $(a_0.. a_y; (a_1-a_0)...(a_y-a_{y-1}))$.

9. The method of any of the preceding claims, wherein one of said entity is a building, part thereof, or some geographical unit or area, and the measured usage value is the amount of (a) electricity consumed, (b) water consumed, (c) gas consumed, or (d) oil consumed.

10. The method of any of the preceding claims, further including transmitting said first parameter value and/or the or each further parameter value and/or the or each reading over a network to a remote location.

11. The method of claim 10, wherein said first parameter value and/or the or each further parameter value and/or the or each reading is transmitted substantially immediately after a respective reading or determination of a respective parameter value.

12. The method of claim 10, wherein
one or more of said measured usage values $(a_0...a_y; (a_1-a_0)...(a_y-a_{y-1}))$ and/or the or each reading $(a_0...a_y)$ is stored in memory; and
one or more stored measured usage values $(a_0...a_y; (a_1-a_0)...(a_y-a_{y-1}))$ and/or readings $(a_0...a_y)$ are transmitted at predetermined times, or following a predetermined time delay after a respective reading or determination of a respective parameter value.

13. A metering unit adapted to be associated with an entity, for for determining each of one or more elemental periods $(\Delta x)$ in a measurement period (x), an elemental usage value, each elemental usage value indicating the amount of usage of a resource by an entity and being associated with the respective elemental period ($\Delta$x), each elemental period ($\Delta$x) being of the same length and the measurement period x being an integer multiple of the elemental period ($\Delta$x), the metering unit comprising:

a meter,
conversion circuitry, and
a processor;
wherein the processor is operable for:

obtaining a plurality of measured usage values ($a_0...a_y$; ($a_1-a_0$)...($a_y-a_{y-1}$)) in succession, each measured usage value relating to a respective one of a plurality of successive data read periods (01:00-01:00...02:00-01:00), the data read periods including a first data read period (01:00-01:00) and a plurality of further data read periods (01:00-24:00...02:00-01:00); and
determining said elemental usage values from the obtained measured usage values;
wherein the further data read periods (01:00-24:00... 02:00-01:00) are of equal length (z) and the first data read period (01:00-01:00) is longer (z+$\Delta$x) than the further data read periods (01:00-24:00 ... 02:00-01:00) by said elemental period ($\Delta$x).

**14.** The metering unit of claim 11, wherein in obtaining said plurality of measured usage values ($a_0...a_y$; ($a_1-a_0$)...($a_y-a_{y-1}$)) the processor is operable for:

obtaining a first reading ($a_0$) at the start of the first data read period (01:00-01:00);
obtaining a second reading ($a_1$) at the end of the first data read period;
for each of the plurality of further data read periods (01:00-24:00...02:00-01:00), obtaining a respective reading ($a_2...a_y$) at the end of the further data read period.

**15.** The metering unit of claim 14, wherein the measured usage values ($a_0...a_y$; ($a_1-a_0$)...($a_y-a_{y-1}$)) comprise said first, second and further readings ($a_0...a_y$); and the processor is operable for
determining said elemental usage values comprises, for the or each elemental period ($\Delta$x), determining the elemental usage value associated therewith using the difference between two successive readings.

**16.** The metering unit of claim 14, wherein the measured usage values (($a_1-a_0$)...($a_y-a_{y-1}$)) comprise the difference between two successive readings ($a_0...a_y$); and the processor is operable for
determining said elemental usage values comprises, for the or each elemental period ($\Delta$x), determining the elemental usage value associated therewith using the difference between successive measured usage values (($a_1-a_0$)...($a_y-a_{y-1}$)).

**17.** The metering unit of any of claims 14 to 16, wherein each reading comprises an instantaneous cumulative reading of resource usage.

**18.** The metering unit of claim 15, wherein the total number of data read periods is given by

$$y = x/\Delta x + 1,$$

where

x is the measurement period whose statistical values are sought to be obtained, and
$\Delta$x is the length of said elemental periods.

**19.** The metering unit of any of claims 13 to 18, wherein the overall duration to take all the readings is given by:

$$T = [\{(x/\Delta x)+1\}.z] + \Delta x$$

where

x is the measurement period whose statistical values are sought to be obtained,
$\Delta x$ is the length of said elemental periods, and
z is the length of said further data read periods.

20. The metering unit of any of claims 11 to 15, wherein in obtaining the measured usage values ($a_0...a_y$; ($a_1-a_0$)... ($a_y-a_{y-1}$)) the processor is operable for:

    using a meter to measure the usage of a resource over the first data read period or the or each further data read period, respectively, and
    generating an electronic signal representative of the measured usage values ($a_0...a_y$; ($a_1-a_0$)...($a_y-a_{y-1}$)).

21. The metering unit of any of claims 13 to 20, wherein the one of said entity is a building, part thereof, or some geographical unit or area, and the measured usage value is the amount of (a) electricity consumed, (b) water consumed, (c) gas consumed, or (d) oil consumed.

22. The metering unit of any of claims 13 to 21, further including a data transmission device, wherein the processor is further operable for transmitting said f measured usage values ($a_0...a_y$; ($a_1-a_0$)...($a_y-a_{y-1}$)) and/or the or each reading over a network to a remote location.

23. The method of claim 18, wherein said processor is further operable for transmitting said measured usage values ($a_0...a_y$; ($a_1-a_0$)...($a_y-a_{y-1}$)) and/or the or each reading substantially immediately after a respective reading or determination of a respective measured usage values ($a_0...a_y$; ($a_1-a_0$)...($a_y-a_{y-1}$)).

24. The method of claim 18, wherein the processor is further operable for
    storing in memory one or more of measured usage values ($a_0...a_y$; ($a_1-a_0$)...($a_y-a_{y-1}$)) and/or the or each reading; and
    transmitting one or more of said measured usage values ($a_0...a_y$; ($a_1-a_0$)...($a_y-a_{y-1}$)) and/or readings at predetermined times, or following a predetermined time delay after a respective reading or determination of a respective measured usage values ($a_0...a_y$; ($a_1-a_0$)...($a_y-a_{y-1}$)).

25. A data processing system for determining, for each of one or more elemental periods ($\Delta x$) in a measurement period (x), an elemental usage value, each elemental usage value indicating the amount of usage of a resource by an entity and being associated with the respective elemental period ($\Delta x$), each elemental period ($\Delta x$) being of the same length and the measurement period x being an integer multiple of the elemental period ($\Delta x$), the system comprising:

    a processor;
    memory; and
    a communications device;
    wherein the processor is operable in conjunction with the memory and communications device for receiving, processing and transmitting data;
    the data processing system being adapted to be wire or wirelessly coupled to one or more remote metering units, the or each metering unit being associated with a respective entity; wherein, for the or each metering unit, the processor is operable for
    transmitting a plurality of polling communications, causing the metering unit to obtain a plurality of measured usage values ($a_0...a_y$; ($a_1-a_0$)...($a_y-a_{y-1}$)) in succession, each measured usage value relating to a respective one of a plurality of successive data read periods (01:00-01:00...02:00-01:00), the data read periods including a first data read period (01:00-01:00) and a plurality of further data read periods (01:00-24:00...02:00-01:00); and determine said elemental usage values from the obtained measured usage values;
    wherein the further data read periods (01:00-24:00...02:00-01:00) are of equal length (z) and the first data read period (01:00-01:00) is longer (z+$\Delta x$) than the further data read periods (01:00-24:00...02:00-01:00) by said elemental period ($\Delta x$).

26. The data processing system of claim 25, wherein, for the or each metering unit, the processor is operable for
    transmitting a first polling communication, causing the metering unit to obtain a first reading ($a_0$) at the start of the first data read period (01:00-01:00);
    receiving the first reading ($a_0$) from the metering unit;
    transmitting a second polling communication, causing the metering unit to obtain a second reading ($a_1$) at the end of the first data read period;
    receiving the second reading ($a_1$) from the metering unit;

for each of one or more further data read periods (01:00-24:00...02:00-01:00), transmitting a further polling communication, causing the metering unit to obtaining a respective further reading ($a_{2...}a_y$) at the end of each of the further data read period(s); receiving the further reading(s) ($a_2...a_y$) from the metering unit.

27. The system of claim 26, wherein the measured usage values ($a_0...a_y$; ($a_1-a_0$)...($a_y-a_{y-1}$)) comprise said first, second and further readings ($a_0...a_y$); and the processor is operable for
determining said elemental usage values comprises, for the or each elemental period ($\Delta x$), determining the elemental usage value associated therewith using the difference between two successive readings.

28. The system of claim 26, wherein the measured usage values (($a_1-a_0$)...($a_y-a_{y-1}$)) comprise the difference between two successive readings ($a_0...a_y$); and the processor is operable for
determining said elemental usage values comprises, for the or each elemental period ($\Delta x$), determining the elemental usage value associated therewith using the difference between successive measured usage values (($a_1-a_0$)...($a_y-a_{y-1}$)).

29. The system of any of claims 25 to 28, wherein each reading comprises an instantaneous cumulative reading of resource usage.

30. A recordable, rewritable or storable medium having recorded or stored thereon data defining or transformable into instructions for execution by processing circuitry and corresponding to at least the steps of any of claims 1 to 12.

31. A server computer incorporating a communications device and a memory device and being adapted for transmission on demand or otherwise of data defining or transformable into instructions for execution by processing circuitry and corresponding to at least the steps of any of claims 1 to 12.

**Patentansprüche**

1. Verfahren zur Ermittlung eines elementaren Verbrauchswerts für ein oder jedes mehrerer Zeitraumelemente ($\Delta x$) während einer Messdauer (x), wobei jeder elementare Verbrauchswert den Wert eines Verbrauchs einer Ressource durch eine Funktionseinheit anzeigt und mit dem entsprechenden Zeitraumelement ($\Delta x$) verknüpft ist, wobei jedes Zeitraumelement ($\Delta x$) von gleicher Länge ist und die Messdauer x ein ganzzahliges Vielfaches des Zeitraumelements ($\Delta x$) ist, wobei das Verfahren umfasst:

   Erhalten einer Mehrzahl gemessener Verbrauchswerte ($a_0...a_y$, ($a_1-a_0$) ... ($a_y-a_{y-1}$)) in Folge, wobei jeder gemessene Verbrauchswert sich auf einen Bestimmten Zeitraum einer Mehrzahl von aufeinander folgenden Datenlesezeiträumen (01:00- 01:00,..02:00-01.00) bezieht, wobei die Datenlesezeiträume einen ersten Datenlesezeitraum (01:00-01 00) und eine Mehrzahl von weiteren Datenlesezeiträumen (01:00-24:00 ... 02 00-01:00) beinhalten, und
   Bestimmen der elementaren Verbrauchswerte aus den erhaltenen gemessenen Verbrauchswerten,
   wobei die weiteren Datenlesezeiträume (01:00-24:00...02:00-01:00) von gleicher Länge (z) sind und der erste Datenlesezeitraum (01:00-01:00) um das eitraumelement ($\Delta x$) länger ist (z+$\Delta x$) als die weiteren Datenlesezeiträume (01:00- 24,00 ... 02:00-01:00)

2. Verfahren nach Anspruch 1, wobei das Erhalten der Mehrzahl gemessener Verbrauchswerte ($a_0...a_y$ ($a_1-a_0$) ... ($a_y-a_{y-1}$)) umfasst.

   Erhalten einer ersten Ablesung ($a_0$) zu Beginn des ersten Datenlesezeitraums (01:00-01:00),
   Erhalten einer zweiten Ablesung ($a_1$) am Ende des ersten Datenlesezeitraums, Erhalten einer entsprechenden Ablesung ($a_2...a_y$) für jeden der Mehrzahl Verbrauchswerte Datenlesezeiträume (01:00-24:00 02.00-01:00) am Ende jedes weiteren Datenlesezeitraums.

3. Verfahren nach Anspruch 2, wobei die gemessenen Verbrauchswerte ($a_0...a_y$, ($a_1-a_0$)...($a_y-a_{y-1}$)) erste, zweite und weitere Ablesungen ($a_0...a_y$) umfassen und die Ermittlung der elementaren Verbrauchswerte für das oder jedes Zeitraumelement ($\Delta x$) die Ermittlung damit verbundener elementarer Verbrauchswerte umfasst, wobei die Differenz zwischen zwei aufeinanderfolgenden gemessenen Verbrauchswerten genutzt wird.

4. Verfahren nach Anspruch 2, wobei die gemessenen Verbrauchswerte (($a_1-a_0$) ... ($a_y-a_{y-1}$)) die Differenz zwischen

zwei aufeinanderfolgenden Ablesungen ($a_0...a_y$) umfasst und
die Ermittlung der elementaren Verbrauchswerte für das oder jedes Zeitraumelement ($\Delta x$) die Erfassung des damit verbundenen Elementarverbrauchswertes umfasst, wobei die Differenz zwischen aufeinanderfolgenden gemessenen Verbrauchswerten (($a_1-a_0$) ... ($a_y-a_{y-1}$)) genutzt wird

5. Verfahren nach einem der Ansprüche 2 bis 4 wobei jede Ablesung ein nmittelbares, kumulatives Ablesen des Verbrauches der Ressource umfasst

6. Verfahren nach einem der vorstehenden Ansprüche, wobei die gesamte Anzahl on Datenlesezeiträumen durch $Y=x/\Delta x+1$ gegeben ist,
wobei x die Messdauer ist, deren statistische Werte zu erhalten gesucht sind und
$\Delta x$ die Länge des Zeitraumelements ist.

7. Verfahren nach einem der vorstehenden Ansprüche wobei die Gesamtdauer um Aufnehmen sämtlicher Messungen durch $T=[[(x/\Delta x)+1]z]+\Delta x$ gegeben ist, wobei x die Messdauer ist, deren statistischer Wert zu erhalten gesucht wird,
$\Delta x$ die Länge des Zeitraumelementes ist und
z die Länge von weiteren Datenleseperioden ist.

8. Verfahren nach einem der vorstehenden Ansprüche wobei die Schritte des Erhaltens der gemessenen Gebrauchswerte ($a_0...a_y$: ($a_1-a_0$)...($a_y-a_{y-1}$)) umfassen:

    Verwenden eines Instruments zum Messen des Verbrauchs einer Ressource über den ersten Datenlesezeitraum oder den weiteren bzw. jeden weiteren Datenlesezeitraum und
    Erzeugen eines elektrischen Signals repräsentativ für die gemessenen Verbrauchswerte ($a_0...a_y$; ($a_1-a_0$)... ($a_y-a_{y-1}$)).

9. Verahren nach einem der vorstehenden Ansprüche, wobei eine der Funktionseinheiten ein Gebäude, ein Teil davon oder eine bestimmte geographische Einheit oder ein bestimmter geographischer Bereich ist, und wobei der gemessene Verbrauchswert die Menge von a) verbrauchter Elektrizität, b) verbrauchtem Wasser, c) verbrauchtem Gas oder d) verbrauchtem Öl ist.

10. Verfahren nach einem der vorstehenden Ansprüche, des Weiteren beinhaltend in Übermitteln der ersten Parameterwerte und/oder des weiteren oder jedes weiteren Parameterwertes und/oder der oder jeder Ablesung über ein Netzwerk an einen entfernten Ort.

11. Verfahren nach Anspruch 10, wobei der erste Parameterwert und/oder der weitere oder jeder weitere Parameterwert und/oder die oder jede Ablesung im Wesentlichen unmittelbar nach der entsprechenden Ablesung oder Feststellung des entsprechenden Parameterwertes übermittelt werden.

12. Verfahren nach Anspruch 10, wobei
ein oder mehrere der gemessenen Verbrauchswerte ($a_0...a_y$; ($a_1-a_0$) ($a_y-a_{y-1}$)) und/oder die oder jede Ablesung ($a_0...a_y$) in einer Speichereinheit espeichert wird/werden und
einer oder mehrere der gespeicherten gemessenen Verbrauchswerte ($a_0...a_y$; ($a_1-a_0$)...($a_y-a_{y-1}$)) und/oder Ablesungen ($a_0...a_y$) zu vorbestimmten Zeitpunkten oder nachfolgend einer bestimmten Zeitverzögerung nach einer entsprechenden Ablesung oder Bestimmung eines entsprechenden Parameterwertes übermittelt werden.

13. Messeinheit, eingerichtet zum Verknüpfen mit einer Funktionseinheit, zum Ermitteln eines elementaren Verbrauchswertes eines Zeitraumelementes oder jedes von mehreren Zeitraumelementen ($\Delta x$) während einer Messzeitdauer (x), wobei jeder elementare Verbrauchswert die Menge eines Verbrauches einer Ressource durch eine Funktionseinheit anzeigt und mit dem entsprechenden Zeitraumelement ($\Delta x$) verknüpft ist, wobei jedes Zeitraumelement ($\Delta x$) von gleicher Länge ist und die Messdauer x ein ganzzahliges Vielfaches des Zeitraumelements ($\Delta x$) ist,
wobei die Messeinheit einen Messapparat, eine Umsetzungsschaltung und
einen Prozessor umfasst,
wobei der Prozessor betätigbar ist, um:

    eine Mehrzahl von gemessenen Verbrauchswerten ($a_0$ .. $a_y$; ($a_1-a_0$)... ($a_y$-in Folge zu erhalten, wobei jeder gemessene Verbrauchswert sich auf inen bestimmten Zeitraum einer Mehrzahl von aufeinander folgenden Datenlesezeiträumen (01:00-01:00...02:00-01:00) bezieht, wobei die atenlesezeiträume einen ersten Datenlesezeitraum (01:00-01:00) und eine Mehrzahl von weiteren Datenlesezeiträumen (01:00-24:00 02:00-01:00) beinhalten, und
die elementaren Verbrauchswerte aus den erhaltenen gemessenen Verbrauchwerten zu bestimmen,
wobei die weiteren Datenlesezeiträume (01:00-24:00...02:00-01:00) von gleicher Länge (z) sind und der erste Datenlesezeitraum (01:00-01:00) um das Zeitraumelement ($\Delta x$) länger ist (z+$\Delta x$) als die weiteren Datenlesezeiträume (01:00-24:00 ... 02:00-01:00).

14. Messeinheit nach Anspruch 11 wobei der Prozessor beim Erhalten der Mehrzahl von gemessenen Verbrauchswerten ($a_0$ ... $a_y$ ($a_1$-$a_0$) ($a_y$-$a_{y-1}$)) betätigbar ist, um:

    eine erste Ablesung ($a_0$) zu Beginn des ersten Datenlesezeitraums (01:00-01:00) zu erhalten,
    eine zweite Ablesung ($a_1$) am Ende des ersten Datenlesezeitraums zu erhalten,
    für jeden der Mehrzahl weiterer Datenlesezeiträume (01:00-24.00 ... 02:00-01:00) am Ende jedes weiteren Datenlesezeitraums eine entsprechende Ablesung ($a_2$ ... $a_y$) zu erhalten.

15. Messeinheit nach Anspruch 14, wobei die gemessenen Verbrauchswerte ($a_0$ ... $a_y$; ($a_1$-$a_0$) ... ($a_y$-$a_{y-1}$)) die ersten, zweiten und weiteren Ablesungen ($a_0$ ... $a_y$) umfassen und wobei der Prozessor betrieben werden kann, um die elementaren Verbrauchswerte zu bestimmen, wobei für das Zeitraumelement oder jedes Zeitraumelement ($\Delta x$) die damit verknüpftem elementaren Verbrauchswerte unter Verwendung der Differenz zwischen zwei aufeinander folgenden Ablesungen bestimmt werden.

16. Messeinheit nach Anspruch 14, wobei die gemessenen Verbrauchswerte (($a_1$-$a_0$ ... ($a_y$-$a_{y-1}$)) die Differenz zwischen zwei aufeinander folgenden Messungen ($a_0$ ... $a_y$) umfassen, und der Prozessor betrieben werden kann, so dass das Bestimmen der elementaren Verbrauchswerte für das Zeitraumelement oder jedes Zeitraumelement ($\Delta x$) ein Bestimmen der damit verbundenen elementaren Verbrauchswerte umfasst, obei die Differenz zwischen zwei aufeinander folgenden gemessenen erbrauchswerten (($a_1$-$a_0$) .. ($a_y$-$a_{y-1}$)) genutzt wird.

17. esseinheit nach einem der Ansprüche 14 bis 16, wobei jede Ablesung ein unmittelbares, kumulatives Ablesen des Verbrauches der Ressource umfasst.

18. Messeinheit nach Anspruch 15. wobei die gesamte Anzahl von Datenlesezeiträumen urch y=x/$\Delta x$+1 gegeben ist, wobei x die Messdauer ist, deren statistische Werte zu erhalten gesucht sind und
$\Delta x$ die Länge des Zeitraumelements ist.

19. Messeinheit nach einem der Ansprüche 13 bis 18, wobei die Gesamtdauer zum Aufnehmen sämtlicher Messungen durch T=[[(x/$\Delta x$)+1]z]+$\Delta x$ gegeben ist,
wobei x die Messdauer ist, deren statistischer Wert zu erhalten gesucht wird,
$\Delta x$ die Länge des Zeitraumelementes ist und
die Länge von weiteren Datenleseperioden ist

20. Messeinheit nach einem der Ansprüche 11 bis 15, wobei der Prozessor beim Erhalten der gemessenen Verbrauchswerte ($a_0$ ... $a_y$; ($a_1$-$a_0$) ... ($a_y$-$a_{y-1}$)) betrieben werden kann zum:
Verwenden eines Messgerätes zum Messen des Verbrauchens einer Ressource über Den ersten Datenlesezeitraum oder den weiteren bzw. jeden weiteren Datenlesezeitraum und
Erzeugen eines elektrischen Signals, das für die gemessenen Verbrauchswerte ($a_0$... $a_y$ ($a_1$-$a_0$) ($2_y$-$a_{y-1}$)) repräsentativ ist.

21. Messeinheit nach einem der Ansprüche 13 bis 20, wobei eine der Funktionseinheiten eine Gebäude, ein Teil davon oder eine geographische Einheit oder ein bestimmter geographischer Bereich ist, und wobei der gemessene Verbrauchswert die Menge der a) verbrauchter Elektrizität, b) verbrauchtem Wasser c) verbrauchtem Gas oder d) verbrauchtem Öl ist.

22. Messeinheit nach einem der Ansprüche 13 bis 21, des Weiteren beinhaltend eine Datenübertragungsvorrichtung, wobei der Prozessor des Weiteren betrieben werden kann, um die gemessenen Verbrauchswerte ($a_0$ .. $a_y$: ($a_1$-$a_0$) ... ($a_y$-$a_{y-1}$)) und/oder die oder jede Ablesung über eine Netzwerk an einen entfernten Ort zu übermitteln.

23. Verfahren nach Anspruch 18, wobei der Prozessor des Weiteren betrieben werden kann, um die gemessenen Verbrauchswerte ($a_0$... $a_y$; ($a_1$-$a_0$) ... ($a_y$-$a_{y-1}$)) zu übermitteln und/oder die oder jede Ablesung im Wesentlichen unmittelbar nach einer entsprechenden Ablesung oder Bestimmung eines entsprechenden gemessenen Verbrauchswertes ($a_0$... $a_y$; ($a_1$-$a_0$) ... ($a_y$-$a_{y-1}$)) zu übermitteln.

24. Verfahren nach Anspruch 18, wobei der Prozessor des Weiteren betrieben werden kann zum:
peichern eines oder mehrerer der gemessenen Verbrauchswerte (($a_0$ ... $a_y$; ($a_1$-$a_0$) ($a_y$-$a_{y-1}$)) und/oder der oder jeder Ablesung in einem Speicher und
Übermitteln eines oder mehrerer der gemessenen Verbrauchswerte (($a_0$ ... $a_y$, ($a_1$-$a_0$) ... ($a_y$-$a_{y-1}$)) und/oder Messungen zu vorbestimmten Zeiten oder nachfolgend einer orbestimmten Zeitverzögerung nach einer entsprechenden Ablesung oder Bestimmung ines entsprechenden gemessenen Verbrauchswertes (($a_0$ ... $a_y$; ($a_1$-$a_0$... ($a_y$-$a_{y-1}$)).

25. atenverarbeitungssystem zum Ermitteln eines elementaren Verbrauchswertes eines Zeitraumelementes oder jedes von mehreren Zeitraumelementen ($\Delta x$) während einer Messzeitdauer (x), wobei jeder elementare Verbrauchswert die Menge eines Verbrauches einer Ressource durch eine Funktionseinheit anzeigt und mit dem entsprechenden Zeitraumelement ($\Delta x$) verknüpft ist, wobei jedes Zeitraumelement ($\Delta x$) on gleicher Länge ist und die Messdauer x ein ganzzahliges Vielfaches des Zeitraumelements ($\Delta x$) ist.
wobei das System einen Prozessor, eine Speichereinheit und eine Kommunikationsvorrichtung umfasst.
wobei der Prozessor zusammen mit der Speichereinheit und der Kommunikationseinheit zum Empfangen, Verarbeiten und Übermitteln von Daten betrieben werden kann,
das Datenverarbeitungssystem eingerichtet ist drahtlos oder über Draht mit einer oder mehreren entfernten Ableseeinheiten verbunden zu sein, wobei die oder jede Ableseeinheit mit einer entsprechenden Funktionseinheit verbunden ist, wobei für die oder jede Ableseeinheit der Prozessor betrieben werden kann zum Übermitteln einer Mehrzahl von Polling-Datenübertragungen, die veranlassen, dass die Ableseeinheit eine Mehrzahl von gemessenen Verbrauchswerten ($a_0$ ... $a_y$; ($a_1$-$a_0$)... ($a_y$-$a_{y-1}$)) in Abfolge erhält, wobei sich jeder gemessener Verbrauchswert auf einen entsprechenden Datenlesezeitraum einer Mehrzahl von aufeinander folgenden Datenlesezeiträumen (01:00-01:00...02:00-01:00) bezieht, die Datenlesezeiträume einen
rsten Datenlesezeitraum (01:00-01:00) und eine Mehrzahl von weiteren Datenlesezeiträumen (01:00-24:00... 0200-01:00) beinhalten und
Bestimmen der elementaren Verbrauchswerte aus den erhaltenen gemessenen Verbrauchwerten,
wobei die weiteren Datenlesezeiträume (01:00-24:00...02:00-01:00) von leicher Länge (z) sind und der erste Datenlesezeitraum (01:00-01:00) um die elementare Periode ($\Delta x$) länger ist (z+$\Delta x$) als die weiteren Datenlesezeiträume (01:00-24:00...02:00-01:00).

26. Datenverarbeitungssystem nach Anspruch 25, wobei für die oder jede Ableseeinheit der Prozessor betrieben werden kann zum
Übermittein der ersten Polling-Datenübertragung, die dazu führt, dass die Ableseeinheit ine erste Ablesung ($a_0$) zu Beginn des ersten Datenlesezeitraums (01:00-01:00) erhält, Empfangen der ersten Ablesung ($a_0$) von der Ableseeinheit,
Übermitteln einer zweiten Polling-Datenübertragung, wodurch verursacht wird, dass die Ableseeinheit eine zweite Ablesung ($a_1$) am Ende des ersten Datenlesezeitraums erhält, Empfangen der zweiten Ablesung ($a_1$) von der Ableseeinheit,
Übermitteln einer weiteren Polling-Datenübertragung für den weiteren Datenlesezeitraum oder jeden der mehreren weiteren Datenlesezeiträume (01:00-24:00 ..02:00-01:00), wodurch verursacht wird, dass die Ableseeinheit eine entsprechende eitere Ablesung ($a_2$... $a_y$) am Ende jedes der weiteren Datenlesezeiträume erhält, Empfangen der weiteren Ablesung(en) ($a_2$ ... $a_y$) von der Ableseeinheit.

27. System nach Anspruch 26, wobei die gemessenen Verbrauchswerte (($a_0$ ... $a_y$; ($a_1$-$a_0$) ... $a_y$-$a_{y-1}$)) die ersten, zweiten und weiteren Ablesungen ($a_0$ ... $a_y$) umfassen, und wobei der Prozessor betrieben werden kann, um die elementaren Verbrauchswerte zu bestimmen, so dass für den Datenlesezeitraum oder jeden Datenlesezeitraum ($\Delta x$) die damit verknüpften elementaren Verbrauchswerte unter Verwendung der Differenz zwischen zwei aufeinander folgenden Ablesungen bestimmt werden

28. System nach Anspruch 26, wobei die gemessenen Verbrauchswerte (($a_1$-$a_0$... ($a_y$-$a_{y-1}$)) die Differenz zwischen zwei aufeinander folgenden Ablesungen ($a_0$.. $a_y$) umfassen, und der Prozessor betrieben werden kann, so dass das Bestimmen der elementaren Verbrauchswerte für den Datenlesezeitraum oder jeden Datenlesezeitraum ($\Delta x$) ein Bestimmen der damit verbundenen elementaren Verbrauchswerte umfasst, wobei die Differenz zwischen zwei aufeinander folgenden gemessenen Verbrauchswerten (($a_1$-$a_0$) ($a_y$-$a_{y-1}$)) verwendet wird.

29. System nach einem der Ansprüche 25 bis 28, wobei jede Ablesung eine unmittelbare, kumulative Ablesung des Verbrauches der Ressource umfasst.

**30.** eschreibbares, wiederbeschreibbares oder speicherbares Medium mit darauf geschriebenen oder gespeicherten Daten, die Instruktionen zum Ausführen wenigstens der Schritte eines der Ansprüche 1 bis 12 durch eine Verarbeitungsschaltung oder Entsprechendes definieren oder in derartige Anweisungen transformierbar sind.

**31.** Servercomputer beinhaltend eine Kommunikationsvorrichtung und eine Speichervorrichtung und dazu eingerichtet, um auf Verlangen oder Anderes Daten zu übermitteln, die Anweisungen zur Ausführung wenigstens der Schritte eines der Ansprüche 1 bis 12 durch eine Verarbeitungsschaltung oder Entsprechendes definieren oder in derartige Anweisungen transformierbar sind.

**Revendications**

**1.** Procédé de détermination, pour chacune d'une ou plusieurs périodes élémentaires ($\Delta x$) dans une période de mesure (x), d'une valeur d'utilisation élémentaire, chaque valeur d'utilisation élémentaire indiquant la quantité d'utilisation d'une ressource pour une entité et étant associée à la période élémentaire ($\Delta x$) respective, chaque période élémentaire ($\Delta x$) étant de la même longueur et la période de mesure x étant un nombre entier multiple de la période élémentaire ($\Delta x$), le procédé comprenant les étapes suivantes :

l'obtention d'une pluralité de valeurs d'utilisation mesurées ($a_0...a_y$; $(a_1-a_0)... (a_y-a_{y-1})$), chaque valeur d'utilisation mesurée se rapportant à une période respective d'une pluralité de périodes de lecture de données successives (01:00-01:00... 02:00-01:00), les périodes de lecture de données comprenant une première période de lecture de données (01:00-01:00) et une pluralité de périodes de lecture de données supplémentaires (01:00-24:00... 02:00-01:00) ; et
la détermination desdites valeurs d'utilisation élémentaires à partir des valeurs d'utilisation mesurées obtenues ; dans lequel les périodes de lecture de données supplémentaires (01:00-24:00...02:00 01:00) sont de longueur égale (z) et la première période de lecture de données (01:00-01:00) est plus longue ($z+\Delta x$) que les périodes de lecture de données supplémentaires (01:00-24:00...02:00-01:00) de ladite période élémentaire ($\Delta x$).

**2.** Procédé selon la revendication 1, dans lequel l'obtention de ladite pluralité de valeurs d'utilisation mesurées ($a_0...a_y$; $(a_1-a_0)...(a_y-a_{y-1})$) comprend les étapes suivantes :

l'obtention d'une première lecture ($a_0$) au démarrage de la première période de lecture de données (01:00-01:00) :
l'obtention d'une deuxième lecture ($a_1$) à la fin de la première période de lecture de données ;
pour chacune de la pluralité de périodes de lecture de données supplémentaires (01:00-24:00. 02:00-01:00), l'obtention d'une lecture ($a_2...a_y$) respective à la fin de la période de lecture de données supplémentaire.

**3.** Procédé selon la revendication 2, dans lequel les valeurs d'utilisation mesurées ($a_0...a_y$; $(a_1-a_0)...(a_y-3_{y-1})$) comprennent lesdites première, deuxième lectures et des lectures supplémentaires ($a_0... a_y$) ; et
la détermination desdites valeurs d'utilisation élémentaires comprend, pour la ou chaque période élémentaire ($\Delta x$), la détermination de la valeur d'utilisation élémentaire qui lui est associée à l'aide de la différence entre deux lectures successives.

**4.** Procédé selon la revendication 2, dans lequel les valeurs d'utilisation mesurées ($(a_1...a_0)...(a_y-a_{y-1})$) comprennent la différence entre deux lectures successives ($a_0...a_y$) ; et
la détermination desdites valeurs d'utilisation élémentaires comprend, pour la ou chaque période élémentaire ($\Delta x$), la détermination de la valeur d'utilisation élémentaire qui lui est associée à l'aide de la différence entre deux valeurs d'utilisation mesurées successives ($(a_1...a_0)...(a_y-a_{y-1})$).

**5.** Procédé selon l'une quelconque des revendications 2 à 4, dans lequel chaque lecture comprend une lecture cumulée instantanée de l'utilisation de ressources.

**6.** Procédé selon l'une quelconque des revendications précédentes, dans lequel le nombre total de périodes de lecture de données est donné par:

$$y = x/\Delta x + 1,$$

où x est la période de mesure dont on cherche à obtenir les valeurs statistiques, et où est la longueur desdites périodes élémentaires.

7. Procédé selon l'une quelconque des revendications précédentes, dans lequel la durée globale de prise de toutes les lectures est donnée par :

$$T = [[(x/\Delta x) + 1].z]+\Delta x$$

où x est la période de mesure dont on cherche à obtenir la valeur statistique,
$\Delta x$ est la longueur desdites périodes élémentaires, et
z est la longueur desdites périodes de lecture de données supplémentaires.

8. Procédé selon l'une quelconque des revendications précédentes, dans lequel les étapes d'obtention des valeurs d'utilisation mesurées ($a_0...a_y$; ($a_1-a_0$)...($a_y-a_{y-1}$)) comprennent :

l'emploi d'un compteur pour mesurer l'utilisation d'une ressource au cours de la première période de lecture de données ou de la ou de chaque période de lecture de données supplémentaire, respectivement, et
la génération d'un signal électronique représentant les valeurs d'utilisation mesurées ($a_0...a_y$; ($a_1-a_0$)...($a_y-a_{y-1}$)).

9. Procédé selon l'une quelconque des revendications précédentes, dans lequel l'une de ladite entité est un bâtiment, une partie de celui-ci, ou une certaine unité ou zone géographique, et la valeur d'utilisation mesurée est la quantité (a) de l'électricité consommée, (b) de l'eau consommée, (c) du gaz consommé, ou (d) de l'huile consommée.

10. Procédé selon l'une quelconque des revendications précédentes, comprenant en outre la transmission de ladite première valeur de paramètre et/ou de la ou de chaque valeur de paramètre supplémentaire et/ou de la ou de chaque lecture sur un réseau vers un emplacement à distance.

11. Procédé selon la revendication 10, dans lequel ladite première valeur de paramètre et/ou la ou chaque valeur de paramètre supplémentaire et/ou la ou chaque lecture est transmise sensiblement immédiatement après une lecture ou une détermination respective d'une valeur de paramètre respective.

12. Procédé selon la revendication 10, dans lequel
une ou plusieurs desdites valeurs d'utilisation mesurées ($a_0...a_y$; ($a_1-a_0$) ...($a_y-a_{y-1}$)) et/ou la ou chaque lecture ($a_0...a_y$) sont stockées en mémoire ; et
une ou plusieurs valeurs d'utilisation mesurées ($a_0...a_y$ ; ($a_1-a_0$)...($a_y-a_{y-1}$)) stockées et/ou des lectures ($a_0...a_y$) sont transmises à des moments prédéterminés, ou suite à une temporisation prédéterminée après une lecture ou une détermination respective d'une valeur de paramètre respective.

13. Unité de comptage adaptée pour être associée à une entité, permettant de déterminer pour chacune des une ou plusieurs périodes élémentaires ($\Delta x$) dans une période de mesure (x), une valeur d'utilisation élémentaire, chaque valeur d'utilisation élémentaire indiquant la quantité d'utilisation d'une ressource par une entité et étant associée à la période élémentaire ($\Delta x$) respective, chaque période élémentaire ($\Delta x$) étant de la même longueur et la période de mesure x étant un nombre entier multiple de la période élémentaire ($\Delta x$), l'unité de comptage comprenant :

un compteur,
une circuiterie de conversion, et
un processeur;
dans laquelle le processeur est utilisable pour :

obtenir une pluralité de valeurs d'utilisation mesurées ($a_0...a_y$; ($a_1-a_0$)...($a_y-a_{y-1}$)) successivement, chaque valeur d'utilisation mesurée se rapportant à une période respective d'une pluralité de périodes de lecture de données successives (01:00-01:00...02:00-01-00), les périodes de lecture de données comprenant une première période de lecture de données (01:00-01:00) et une pluralité de périodes de lecture de données supplémentaires (01:00-24:00...02:00-01:00) ; et
déterminer lesdites valeurs d'utilisation élémentaires à partir des valeurs d'utilisation mesurées obtenues ;
dans laquelle les périodes de lecture de données supplémentaires (01:00-24:00...02:00-01:00) sont de longueur égale (z) et la première période de lecture de données (D1:00-01:00) est plus longue (z+$\Delta$x) que les périodes de lecture de données supplémentaires (01:00-24:00...02:00-01:00) de ladite période élémentaire ($\Delta$x).

14. Unité de comptage selon la revendication 11, dans laquelle lors de l'obtention de la pluralité de valeurs d'utilisation mesurées ($a_0$...$a_y$; ($a_1$-$a_0$)...($a_y$-$a_{y-1}$)), le processeur est utilisable pour :

   obtenir une première lecture ($a_0$) au démarrage de la première période de lecture de données (01:00-01:00);
   obtenir une deuxième lecture ($a_1$) à la fin de la première période de lecture de données ;
   pour chacune de la pluralité de périodes de lecture de données supplémentaires (01:00-24:00...02:00-01:00), obtenir une lecture ($a_2$...$a_y$) respective à la fin de la période de lecture de données supplémentaire.

15. Unité de comptage selon la revendication 14, dans laquelle les valeurs d'utilisation mesurées ($a_0$...$a_y$; ($a_1$-$a_0$)...($a_y$-$a_{y-1}$)) comprennent les première, deuxième lectures et des lectures supplémentaires ($a_0$...$a_y$) ; et le processeur est utilisable pour la détermination desdites valeurs d'utilisation élémentaires qui comprend, pour la ou chaque période élémentaire ($\Delta$x), la détermination de la valeur d'utilisation élémentaire qui lui est associée à l'aide de la différence entre deux lectures successives,

16. Unité de comptage selon la revendication 14, dans laquelle les valeurs d'utilisation mesurées (($a_1$...$a_0$)...($a_y$-$a_{y-1}$)) comprennent la différence entre deux lectures successives ($a_0$...$a_y$) ; et le processeur est utilisable pour la détermination desdites valeurs d'utilisation élémentaires qui comprend, pour la ou chaque période élémentaire ($\Delta$x), la détermination de la valeur d'utilisation élémentaire qui lui est associée à l'aide de la différence entre deux valeurs d'utilisation mesurées successives (($a_1$...$a_0$)...($a_y$-$a_{y-1}$)).

17. Unité de comptage selon l'une quelconque des revendications 14 à 16, dans laquelle chaque lecture comprend une lecture cumulée instantanée de l'utilisation de ressources.

18. Unité de comptage selon la revendication 15, dans laquelle le nombre total de périodes de lecture de données est donné par :

$$y = x/\Delta x + 1,$$

où x est la période de mesure dont on cherche à obtenir les valeurs statistiques, et
$\Delta$x est la longueur desdites périodes élémentaires.

19. Unité de comptage selon l'une quelconque des revendications 13 à 18, dans laquelle la durée globale de prise de toutes les lectures est donnée par :

$$T = [[(x/\Delta x) + 1].z] + \Delta x$$

où x est la période de mesure dont on cherche à obtenir la valeur statistique,
$\Delta$x est la longueur desdites périodes élémentaires, et
z est la longueur desdites périodes de lecture de données supplémentaires.

20. Unité de comptage selon l'une quelconque des revendications 11 à 15, dans laquelle lors de l'obtention desdites valeurs d'utilisation mesurées ($a_0$... $a_y$; ($a_1$-$a_0$)...($a_y$-$a_{y-1}$)), le processeur est utilisable pour :

   employer un compteur pour mesurer l'utilisation d'une ressource au cours de la première période de lecture de données ou de la ou de chaque période de lecture de données supplémentaire, respectivement, et
   générer un signal électronique représentant les valeurs d'utilisation mesurées ($a_0$...$a_y$; ($a_1$-$a_0$)...($a_y$-$a_{y-1}$)).

21. Unité de comptage selon l'une quelconque des revendications 13 à 20, dans laquelle l'une de ladite entité est un

**EP 1 914 519 B1**

bâtiment, une partie de celui-ci, ou une certaine unité ou zone géographique, et la valeur d'utilisation mesurée est la quantité (a) de l'électricité consommée, (b) de l'eau consommée, (c) du gaz consommé, ou (d) de l'huile consommée.

22. Unité de comptage selon l'une quelconque des revendications 13 à 21, comprenant en outre un dispositif de transmission de données, dans laquelle le processeur est en outre utilisable pour transmettre t valeurs d'utilisation mesurées $(a_0...a_y; (a_1-a_0)...(a_y-a_{y-1}))$ et/ou la ou chaque lecture sur un réseau vers un emplacement à distance.

23. Procédé selon la revendication 18, dans lequel ledit processeur est en outre utilisable pour transmettre lesdites valeurs d'utilisation mesurées $(a_0...a_y; (a_1-a_0)...(a_y-a_{y-1}))$ et/ou la ou chaque lecture sensiblement immédiatement après une lecture ou une détermination respective d'une valeur d'utilisation mesurée $(a_0...a_y; (a_1-a_0)...(a_y-a_{y-1}))$ respective.

24. Procédé selon la revendication 18, dans lequel le processeur est en outre utilisable pour :

stocker en mémoire une ou plusieurs valeurs d'utilisation mesurées $(a_0...a_y; (a_1-a_0)... (a_y-a_{y-1}))$ et/ou la ou chaque lecture ; et
transmettre une ou plusieurs desdites valeurs d'utilisation mesurées $(a_0...a_y; (a_1-a_0)... (a_y-a_{y-1}))$ et/ou des lectures à des moments prédéterminés, ou suite à une temporisation prédéterminée après une lecture ou une détermination respective d'une valeur d'utilisation mesurée $(a_0... a_y; (a_1-a_0)... (a_y-a_{y-1}))$ respective.

25. Système de traitement de données permettant de déterminer, pour chaque période d'une ou plusieurs périodes élémentaires ($\Delta x$) dans une période de mesure (x), une valeur d'utilisation élémentaire, chaque valeur d'utilisation élémentaire indiquant la quantité d'utilisation d'une ressource par une entité et étant associée à la période élémentaire ($\Delta x$) respective, chaque période élémentaire ($\Delta x$) étant de la même longueur et la période de mesure x étant un nombre entier multiple de la période élémentaire ($\Delta x$), le système comprenant :

un processeur;
une mémoire ; et
un dispositif de communications ;
dans lequel le processeur est utilisable conjointement à la mémoire et au dispositif de communications pour recevoir, traiter et transmettre des données ;
le système de traitement de données étant adapté pour être couplé par le réseau sans fil ou par fil à une ou plusieurs unités de comptage à distance, la ou chaque unité de comptage étant associée à une entité respective ;
dans lequel, pour la ou chaque unité de comptage, le processeur est utilisable pour :

transmettre une pluralité de communications d'invitation à émettre, amenant l'unité de comptage à obtenir une pluralité de valeurs d'utilisation mesurées $(a_0...a_y; (a_1-a_0)...(a_y-a_{y-1}))$ successivement, chaque valeur d'utilisation mesurée se rapportant à une période respective d'une pluralité de périodes de lecture de données successives (01:00-01:00...02:00-01:00), les périodes de lecture de données comprenant une première période de lecture de données (01:00-01:00) et une pluralité de périodes de lecture de données supplémentaires (01:00-24:00...02:00-01:00) ; et
déterminer lesdites valeurs d'utilisation élémentaires à partir des valeurs d'utilisation mesurées obtenues; dans lequel les périodes de lecture de données supplémentaires (01:00-24:00...02:00-01:00) sont de longueur égale (z) et la première période de lecture de données (01:00-01:00) est plus longue $(z+\Delta x)$ que les périodes de lecture de données supplémentaires (01:00-24:00...02:00-01:00) de ladite période élémentaire ($\Delta x$).

26. Système de traitement de données selon la revendication 25, dans lequel, pour la ou chaque unité de comptage, le processeur est utilisable pour
transmettre une première communication d'invitation à émettre, amenant l'unité de comptage à obtenir une première lecture $(a_0)$ au démarrage de la première période de lecture de données (01:00-01 00) ;
recevoir la première lecture $(a_0)$ de l'unité de comptage ;
transmettre une deuxième communication d'invitation à émettre, amenant l'unité de comptage à obtenir une deuxième lecture $(a_1)$ à la fin de la première période de lecture de données ;
recevoir la deuxième lecture $(a_1)$ de l'unité de comptage ;
pour chaque période de la ou des périodes de lecture de données supplémentaires (01:00-24:00...02:00-01:00), transmettre une communication d'invitation à émettre supplémentaire, amenant l'unité de comptage à obtenir une

lecture supplémentaire ($a_2$...$a_y$) respective à la fin de chacune de la ou des périodes de lecture de données supplémentaires ;
recevoir la ou les lectures supplémentaires ($a_2$... $a_y$) de l'unité de comptage.

27. Système selon la revendication 26, dans lequel les valeurs d'utilisation mesurées ($a_0$...$a_y$; ($a_1$-$a_0$)...($a_y$-$a_{y-1}$)) comprennent lesdites première, deuxième lectures et des lectures supplémentaires ($a_0$... $a_y$) : et le processeur est utilisable pour
la détermination desdites valeurs d'utilisation élémentaires qui comprend, pour la ou chaque période élémentaire ($\Delta x$), la détermination de la valeur d'utilisation élémentaire qui lui est associée à l'aide de la différence entre deux lectures successives.

28. Système selon la revendication 26, dans lequel les valeurs d'utilisation mesurées (($a_1$-$a_0$)...($a_y$-$a_{y-1}$)) comprennent la différence entre deux lectures successives ($a_0$...$a_y$) ; et le processeur est utilisable pour
la détermination desdites valeurs d'utilisation élémentaires qui comprend, pour la ou chaque période élémentaire ($\Delta x$), la détermination de la valeur d'utilisation élémentaire qui lui est associée à l'aide de la différence entre des valeurs d'utilisation mesurées successives (($a_1$-$a_0$)...($a_y$-$a_{y-1}$)).

29. Système selon l'une quelconque des revendications 25 à 28, dans lequel chaque lecture comprend une lecture cumulée instantanée de l'utilisation de ressources.

30. Support enregistrable, réinscriptible ou mémorisable comportant des données enregistrées ou mémorisées définissant des instructions ou pouvant être transformées en celles-ci pour exécution par la circuiterie de traitement et correspondant au moins aux étapes de l'une quelconque des revendications 1 à 12.

31. Ordinateur serveur incorporant un dispositif de communications et un dispositif de mémoire et étant adapté pour une transmission à la demande ou autre de données définissant des instructions ou pouvant être transformées en celles-ci pour exécution par une circuiterie de traitement et correspondant au moins aux étapes de l'une quelconque des revendications 1 à 12.

FIG. 1

Data read/
transmitted

FIG. 2

FIG. 3

**Periodic Read Bars**

**Statistical Value Gained**
(Value for the specified gap)

Figure 4

**REFERENCES CITED IN THE DESCRIPTION**

**Patent documents cited in the description**

- JP 2001331883 A
- JP 1282699 A
- US 20060023853 A
- US 5918380 A